# EUROPEAN PATENT APPLICATION

(11) **EP 4 794 288 A1**
(43) Date of publication of application: **19.08.2026**
(21) Application number: 24884738.6
(22) Date of filing: 29.10.2024
(51) Int. Cl.: H04L 41/14

(54) **COMMUNICATION METHOD AND APPARATUS**

(30) Priority: 30.10.2023 CN 202311428205
(71) Applicant: HUAWEI TECHNOLOGIES CO., LTD., Shenzhen 518129 (CN)
(72) Inventor: GUO, Tao, Shenzhen, Guangdong 518129 (CN); WU, Yizhuang, Shenzhen, Guangdong 518129 (CN)
(74) Representative: Grünecker Patent- und Rechtsanwälte PartG mbB
(86) International application number: PCT/CN2024/128175
(87) International publication number: WO 2025/092735

(57) **Abstract**

A communication method and apparatus are provided. The method includes: A first analytics function network element receives an analytics context transfer request from a second analytics function network element, and the first analytics function network element sends an analytics context to the second analytics function network element, where the analytics context includes an identifier of a first model and an identifier of a model training function network element. According to the foregoing method, the analytics context obtained by the second analytics function network element includes the identifier of the first model and the identifier of the model training function network element, instead of directly obtaining first information. The second analytics function network element may obtain the first information from the model training function network element based on the identifier of the first model and the information about the model training function network element, so that the second analytics function network element can obtain the model that is used by the first analytics function network element, and security of obtaining the model can be improved.

## Description

### CROSS-REFERENCE TO RELATED APPLICATIONS

This application claims priority to Chinese Patent Application No. 202311428205.5, filed with the China National Intellectual Property Administration on October 30, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Due to internal (for example, load balancing or graceful shutdown) or external triggering (for example, user equipment (user equipment, UE) mobility), a service consumer network element may transfer one or more analytics subscriptions from one analytics logical function (analytics logical function, AnLF) network element to another AnLF network element, in other words, from a source AnLF network element to a target AnLF network element.

Currently, the service consumer network element or the source AnLF network element needs to use a network element discovery procedure to discover the target AnLF network element, to transmit, from the source AnLF network element to the target AnLF network element, an analytics context of the analytics subscription to be transferred. After the target AnLF network element obtains the analytics context, the target AnLF network element expects to continue to serve for the service consumer network element via a model that is used by the source AnLF network element. Therefore, how the target AnLF network element continues to serve the service consumer network element via the model that is used by the source AnLF network element is a problem worthy of attention.

### SUMMARY

Embodiments of this application provide a communication method and apparatus, to resolve a problem that a source AnLF network element notifies a target AnLF that a model that is used by the source AnLF network element has a security risk.

According to a first aspect, this application provides a communication method. The method may be performed by a first analytics function network element or a module (for example, a chip) in a first analytics function network element. The method includes: The first analytics function network element receives an analytics context transfer request from a second analytics function network element. The first analytics function network element sends an analytics context to the second analytics function network element, where the analytics context includes an identifier of a first model and an identifier of a model training function network element.

According to the foregoing method, the analytics context provided by the first analytics function network element for the second analytics function network element includes the identifier of the first model and the identifier of the model training function network element, instead of directly including first information, so that security of obtaining the model can be improved.

In a possible implementation, the first analytics function network element receives first information from the model training function network element, where the first information is associated with the first model.

In a possible implementation, the first information includes the identifier of the model training function network element.

The model training function network element provides the first information for the first analytics function network element, where the first information is associated with the first model.

The model training function network element is a producer of a model associated with the first information. The model training function network element authorizes the first analytics function network element to obtain the model associated with the first information. The first information includes an identifier of a first model, and a model associated with the first information is the first model.

The first information is information related to the first model. For example, the first information includes a network element identifier of a producer of a model, namely, the identifier of the model training function network element, or a network element identifier of a network element that provides the information related to the first model. The first information may further include an address of the model, for example, a URL.

In a possible implementation, before receiving the analytics context transfer request from the second analytics function network element, the first analytics function network element provides, via the first model, a service corresponding to an analytics identifier; and the first analytics function network element sends an analytics subscription transfer request to the second analytics function network element, where the analytics subscription transfer request includes the analytics identifier.

In a possible implementation, the analytics context transfer request includes an identifier of a vendor of the second analytics function network element. Before sending the analytics context to the second analytics function network element, the first analytics function network element obtains a first interoperability indicator, where the first interoperability indicator is an interoperability indicator corresponding to the analytics identifier of the model training function network element, or the first interoperability indicator is an interoperability indicator of the model training function network element; and the first analytics function network element determines that the first interoperability indicator includes the identifier of the vendor of the second analytics function network element.

According to the foregoing design, whether the first interoperability indicator includes the identifier of the vendor of the second analytics function network element may be determined.

In a possible implementation, the first analytics function network element obtains the first interoperability indicator from the model training function network element or a network repository function network element.

In a possible implementation, before receiving the analytics context transfer request from the second analytics function network element, the first analytics function network element sends a model request message to the model training function network element, where the model request message includes the analytics identifier; and the first analytics function network element receives the identifier of the first model from the model training function network element.

In a possible implementation, before sending the analytics context to the second analytics function network element, the first analytics function network element sends a first request message to the model training function network element, where the first request message is used to request the model training function network element to agree that the first analytics function network element provides the identifier of the first model for the second analytics function network element; and the first analytics function network element receives a first response message from the model training function network element, where the first response message indicates that it is agreed that the first analytics function network element provides the identifier of the first model for the second analytics function network element.

According to the foregoing design, the model training function network element can be requested to authorize the first analytics function network element to provide the identifier of the first model for the second analytics function network element.

According to a second aspect, this application provides a communication method. The method may be performed by a second analytics function network element or a module (for example, a chip) in a second analytics function network element. The method includes: The second analytics function network element sends an analytics context transfer request to a first analytics function network element. The second analytics function network element receives an analytics context from the first analytics function network element, where the analytics context includes an identifier of a first model and an identifier of a model training function network element. The second analytics function network element sends the identifier of the first model to the model training function network element. The second analytics function network element receives first information from the model training function network element, where the first information is associated with the first model.

According to the foregoing method, the analytics context obtained by the second analytics function network element includes the identifier of the first model and the identifier of the model training function network element, instead of directly obtaining the first information from the first analytics function network element. The second analytics function network element may obtain the first information from the model training function network element based on the identifier of the first model and the identifier about the model training function network element, so that the second analytics function network element can obtain the model that is used by the first analytics function network element, and security of obtaining the model can be improved.

In a possible implementation, the first information includes the identifier of the model training function network element.

In a possible implementation, the analytics context transfer request includes an identifier of a vendor of the second analytics function network element.

In a possible implementation, before sending the analytics context transfer request to the first analytics function network element, the second analytics function network element receives an analytics subscription transfer request from the first analytics function network element, where the analytics subscription transfer request includes analytics subscription information; and the second analytics function network element determines the first analytics function network element based on the analytics subscription information.

In a possible implementation, before sending the analytics context transfer request to the first analytics function network element, the second analytics function network element receives an analytics subscription request from a service consumer network element, where the analytics subscription request includes analytics subscription information; and the second analytics function network element determines the first analytics function network element based on the analytics subscription information.

According to a third aspect, this application provides a communication method. The method may be performed by a model training function network element or a module (for example, a chip) in a model training function network element. The method includes: The model training function network element receives an identifier of a first model from a second analytics function network element. The model training function network element determines first information based on the identifier of the first model, where the first information is associated with the first model. The model training function network element sends the first information to the second analytics function network element.

According to the foregoing method, when determining that the second analytics function network element obtains the identifier of the first model, the model training function network element provides the first information for the second analytics function network element, and security of obtaining the model can be improved.

In a possible implementation, before receiving the identifier of the first model from the second analytics function network element, the model training function network element receives a first request message from a first analytics function network element, where the first request message is used to request the model training function network element to agree that the first analytics function network element provides the identifier of the first model for the second analytics function network element; and the model training function network element sends a first response message to the first analytics function network element, where the first response message indicates that it is agreed that the first analytics function network element provides the identifier of the first model for the second analytics function network element.

According to the foregoing design, the model training function network element can authorize the first analytics function network element to provide the identifier of the first model for the second analytics function network element.

In a possible implementation, the model training function network element receives a model request message from the first analytics function network element, where the model request message includes an analytics identifier; and the model training function network element sends the identifier of the first model to the first analytics function network element, where the first model is used to provide a service corresponding to the analytics identifier.

In a possible implementation, before receiving the identifier of the first model from the second analytics function network element, the model training function network element sends a first interoperability indicator to the first analytics function network element, where the first interoperability indicator is an interoperability indicator corresponding to the analytics identifier of the model training function network element, or the first interoperability indicator is an interoperability indicator of the model training function network element.

In a possible implementation, before receiving the identifier of the first model from the second analytics function network element, the model training function network element sends the first information to the first analytics function network element, where the first information is associated with the first model.

In a possible implementation, the first information includes an identifier of the model training function network element.

According to a fourth aspect, this application provides a communication method. The method may be performed by a first analytics function network element or a module (for example, a chip) in a first analytics function network element. The method includes: The first analytics function network element receives an analytics context transfer request from a second analytics function network element. The first analytics function network element sends an analytics context to the second analytics function network element, where the analytics context includes a correlation identifier and an identifier of a model training function network element.

According to the foregoing method, the analytics context provided by the first analytics function network element for the second analytics function network element includes the correlation identifier and the identifier of the model training function network element, instead of directly including first information, so that security of obtaining the model can be improved.

In a possible implementation, the correlation identifier corresponds to first information, the model training function network element is configured to provide the first information, and the first information is associated with a first model.

In a possible implementation, the first analytics function network element sends a model request message to the model training function network element, where the model request message includes an analytics identifier. The first analytics function network element receives an identifier of the first model and the correlation identifier from the model training function network element, where the first model is used to provide a service corresponding to the analytics identifier.

According to the foregoing design, the first analytics function network element may use an existing subscription correlation identifier as the correlation identifier.

In a possible implementation, after receiving the analytics context transfer request from the second analytics function network element, the first analytics function network element sends a third request message to the model training function network element, where the third request message includes the identifier of the first model; and the third request message is used to request the model training function network element to generate an identifier associated with the first information; and the first analytics function network element receives a third response message from the model training function network element, where the third response message includes the correlation identifier.

According to the foregoing design, the first analytics function network element may request the model training function network element to generate, as the correlation identifier, an identifier associated with the first information. Alternatively, this may be described as that the first analytics function network element may request the model training function network element to generate, as the correlation identifier, an identifier associated with the first model.

In a possible implementation, before receiving the analytics context transfer request from the second analytics function network element, the first analytics function network element provides, via the first model, the service corresponding to an analytics identifier; and the first analytics function network element sends an analytics subscription transfer request to the second analytics function network element, where the analytics subscription transfer request includes the analytics identifier.

In a possible implementation, the analytics context transfer request includes an identifier of a vendor of the second analytics function network element. Before sending the analytics context to the second analytics function network element, the first analytics function network element obtains a first interoperability indicator, where the first interoperability indicator is an interoperability indicator corresponding to the analytics identifier of the model training function network element, or the first interoperability indicator is an interoperability indicator of the model training function network element; and the first analytics function network element determines that the first interoperability indicator includes the identifier of the vendor of the second analytics function network element.

In a possible implementation, the first analytics function network element obtains the first interoperability indicator from the model training function network element or a network repository function network element.

According to a fifth aspect, this application provides a communication method. The method may be performed by a second analytics function network element or a module (for example, a chip) in a second analytics function network element. The method includes: The second analytics function network element sends an analytics context transfer request to a first analytics function network element. The second analytics function network element receives an analytics context from the first analytics function network element, where the analytics context includes a correlation identifier and an identifier of a model training function network element. The second analytics function network element sends the correlation identifier to the model training function network element. The second analytics function network element receives first information from the model training function network element, where the first information is associated with a first model.

According to the foregoing method, the analytics context obtained by the second analytics function network element includes the correlation identifier and the identifier of the model training function network element, instead of directly obtaining the first information from the first analytics function network element. The second analytics function network element may obtain the first information from the model training function network element based on the correlation identifier and the identifier about the model training function network element, so that the second analytics function network element can obtain the model that is used by the first analytics function network element, and security of obtaining the model can be improved.

In a possible implementation, the first correlation identifier corresponds to first information, the model training function network element is configured to provide the first information.

In a possible implementation, before sending the analytics context transfer request to the first analytics function network element, the second analytics function network element receives an analytics subscription transfer request from the first analytics function network element, where the analytics subscription transfer request includes analytics subscription information; and the second analytics function network element determines the first analytics function network element based on the analytics subscription information.

In a possible implementation, before sending the analytics context transfer request to the first analytics function network element, the second analytics function network element receives an analytics subscription request from a service consumer network element, where the analytics subscription request includes analytics subscription information; and the second analytics function network element determines the first analytics function network element based on the analytics subscription information.

According to a sixth aspect, this application provides a communication method. The method may be performed by a model training function network element or a module (for example, a chip) in a model training function network element. The method includes: The model training function network element receives a correlation identifier from a second analytics function network element. The model training function network element determines first information based on the correlation identifier, where the first information is associated with a first model. The model training function network element sends the first information to the second analytics function network element.

According to the foregoing method, when determining that the second analytics function network element obtains the correlation identifier, the model training function network element provides the first information for the second analytics function network element, and security of obtaining the model can be improved.

In a possible implementation, before receiving the correlation identifier from the second analytics function network element, the model training function network element receives a third request message from a first analytics function network element, where the third request message includes an identifier of the first model; and the third request message is used to request the model training function network element to generate an identifier associated with the first information; and the model training function network element sends a third response message to the first analytics function network element, where the third response message includes the correlation identifier.

In a possible implementation, the model training function network element receives a model request message from the first analytics function network element, where the model request message includes an analytics identifier. The model training function network element sends the identifier of the first model and the correlation identifier to the first analytics function network element, where the first model is used to provide a service corresponding to the analytics identifier.

In a possible implementation, the model training function network element further sends a first interoperability indicator to the first analytics function network element, where the first interoperability indicator is an interoperability indicator corresponding to the analytics identifier of the model training function network element, or the first interoperability indicator is an interoperability indicator of the model training function network element.

According to a seventh aspect, this application provides a communication method. The method may be performed by a first analytics function network element or a module (for example, a chip) in a first analytics function network element. The method includes: The first analytics function network element receives an analytics context transfer request from a second analytics function network element, where the analytics context transfer request includes a model receiving address. The first analytics function network element sends an identifier of a first model and the model receiving address to a model training function network element.

According to the foregoing method, an analytics context provided by the first analytics function network element for the second analytics function network element includes the identifier of the first model and the model receiving address, instead of directly including first information, so that security of obtaining the model can be improved.

In a possible implementation, before receiving the analytics context transfer request from the second analytics function network element, the first analytics function network element provides, via the first model, the service corresponding to an analytics identifier; and the first analytics function network element sends an analytics subscription transfer request to the second analytics function network element, where the analytics subscription transfer request includes the analytics identifier.

In a possible implementation, the analytics context transfer request includes an identifier of a vendor of the second analytics function network element. Before sending the analytics context to the second analytics function network element, the first analytics function network element obtains a first interoperability indicator, where the first interoperability indicator is an interoperability indicator corresponding to the analytics identifier of the model training function network element, or the first interoperability indicator is an interoperability indicator of the model training function network element; and the first analytics function network element determines that the first interoperability indicator includes the identifier of the vendor of the second analytics function network element.

In a possible implementation, the first analytics function network element obtains the first interoperability indicator from the model training function network element or a network repository function network element.

In a possible implementation, before receiving the analytics context transfer request from the second analytics function network element, the first analytics function network element sends a model request message to the model training function network element, where the model request message includes the analytics identifier; and the first analytics function network element receives the identifier of the first model from the model training function network element.

According to an eighth aspect, this application provides a communication method. The method may be performed by a second analytics function network element or a module (for example, a chip) in a second analytics function network element. The method includes: The second analytics function network element sends an analytics context transfer request to a first analytics function network element. The analytics context transfer request includes a model receiving address. The second analytics function network element obtains first information based on the model receiving address, where the first information is associated with a first model.

According to the foregoing method, the second analytics function network element provides the model receiving address for the first analytics function network element, and obtains the first information based on the model receiving address, so that the second analytics function network element can obtain the model that is used by the first analytics function network element, and security of obtaining the model can be improved.

In a possible implementation, before sending the analytics context transfer request to the first analytics function network element, the second analytics function network element receives an analytics subscription transfer request from the first analytics function network element, where the analytics subscription transfer request includes analytics subscription information; and the second analytics function network element determines the first analytics function network element based on the analytics subscription information.

In a possible implementation, before sending the analytics context transfer request to the first analytics function network element, the second analytics function network element receives an analytics subscription request from a service consumer network element, where the analytics subscription request includes analytics subscription information; and the second analytics function network element determines the first analytics function network element based on the analytics subscription information.

According to a ninth aspect, this application provides a communication method. The method may be performed by a model training function network element or a module (for example, a chip) in a model training function network element. The method includes: The model training function network element receives an identifier of a first model and a model receiving address from a second analytics function network element. The model training function network element determines first information based on the identifier of the first model, where the first information is associated with the first model. The model training function network element provides the first information based on the model receiving address.

According to the foregoing method, the model training function network element obtains the model receiving address from the first analytics function network element, and provides the first information based on the model receiving address, so that the second analytics function network element obtains the model that is used by the first analytics function network element, and security of obtaining the model can be improved.

In a possible implementation, the model training function network element receives a model request message from the first analytics function network element, where the model request message includes an analytics identifier. The model training function network element sends the identifier of the first model to the first analytics function network element, where the first model is used to provide a service corresponding to the analytics identifier.

In a possible implementation, the model training function network element further sends a first interoperability indicator to the first analytics function network element, where the first interoperability indicator is an interoperability indicator corresponding to the analytics identifier of the model training function network element, or the first interoperability indicator is an interoperability indicator of the model training function network element.

According to a tenth aspect, this application provides a communication apparatus. The communication apparatus may be a first apparatus, may be a module or a unit (for example, a chip, a chip system, or a circuit) that is in the first apparatus and that is in one-to-one correspondence with the method/operation/step/action described in any one of the first aspect to the ninth aspect, or can be used together with the first apparatus.

According to an eleventh aspect, this application provides a communication device, including at least one processing element and at least one storage element. The at least one storage element is configured to store a program and data. The at least one processing element is configured to: read and execute the program and the data that are stored in the storage element, so that the method according to any one of the foregoing aspects of this application is implemented.

According to a twelfth aspect, this application further provides a computer program. When the computer program is run on a computer, the computer is caused to perform the method according to any one of the foregoing aspects.

According to a thirteenth aspect, this application provides a communication apparatus. The apparatus includes an interface circuit and at least one processor. The interface circuit is configured to provide input and/or output of a program or instructions for the at least one processor; and the at least one processor is configured to execute the program or the instructions, to cause the communication apparatus to implement the method according to any one of the foregoing aspects.

In a possible manner, the communication apparatus includes the at least one memory, and the at least one memory is configured to store the program or the instructions.

According to a fourteenth aspect, this application provides a computer storage medium. The storage medium stores a software program. When the software program is read and executed by one or more processors, the method according to any one of the foregoing aspects can be implemented.

According to a fifteenth aspect, this application provides a computer program product including instructions. When the instructions are run on a computer, the computer is caused to perform the method according to any one of the foregoing aspects.

According to a sixteenth aspect, this application provides a chip system. The chip system includes at least one chip and a memory. The at least one chip is configured to: read and execute a program stored in the memory, to implement the method according to any one of the foregoing aspects.

According to a seventeenth aspect, this application provides a communication system. The system includes a first analytics function network element, a second analytics function network element, and a model training function network element. The first analytics function network element performs the method according to any one of the first aspect, the fourth aspect, or the seventh aspect, the second analytics function network element performs the method according to any one of the second aspect, the fifth aspect, or the eighth aspect, and the model training function network element performs the method according to any one of the third aspect, the sixth aspect, or the ninth aspect.

In a possible manner, the system further includes a network repository function network element and/or a service consumer network element.

In this application, based on the implementations provided in the foregoing aspects, the implementations may be further combined to provide more implementations.

### BRIEF DESCRIPTION OF DRAWINGS

FIG. 1 is a diagram of a 5G network architecture based on a service-based architecture according to this application;
FIG. 2 is an overview flowchart 1 of a communication method according to this application;
FIG. 3 is a flowchart of triggering, by a service consumer network element, a target AnLF to send an analytics context transfer request to a first AnLF according to this application;
FIG. 4 is a flowchart of triggering, by a first AnLF, a target AnLF to send an analytics context transfer request to the first AnLF according to this application;
FIG. 5 is an overview flowchart 2 of a communication method according to this application;
FIG. 6 is an overview flowchart 3 of a communication method according to this application;
FIG. 7 is an overview flowchart 4 of a communication method according to this application;
FIG. 8 is an overview flowchart 5 of a communication method according to this application;
FIG. 9 is a diagram of a structure of a communication apparatus according to this application; and
FIG. 10 is a diagram of a structure of another communication apparatus according to this application.

### DESCRIPTION OF EMBODIMENTS

The following describes specific implementations of this application by using examples with reference to the accompanying drawings in embodiments of this application. However, the implementations of this application may further include a combination of these embodiments without departing from the spirit or scope of this application. For example, other embodiments may be used and structural changes may be made. Therefore, detailed descriptions of the following embodiments should not be understood in a restrictive sense. Terms used in embodiments of this application are merely used to describe specific embodiments of this application, but are not intended to limit this application.

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

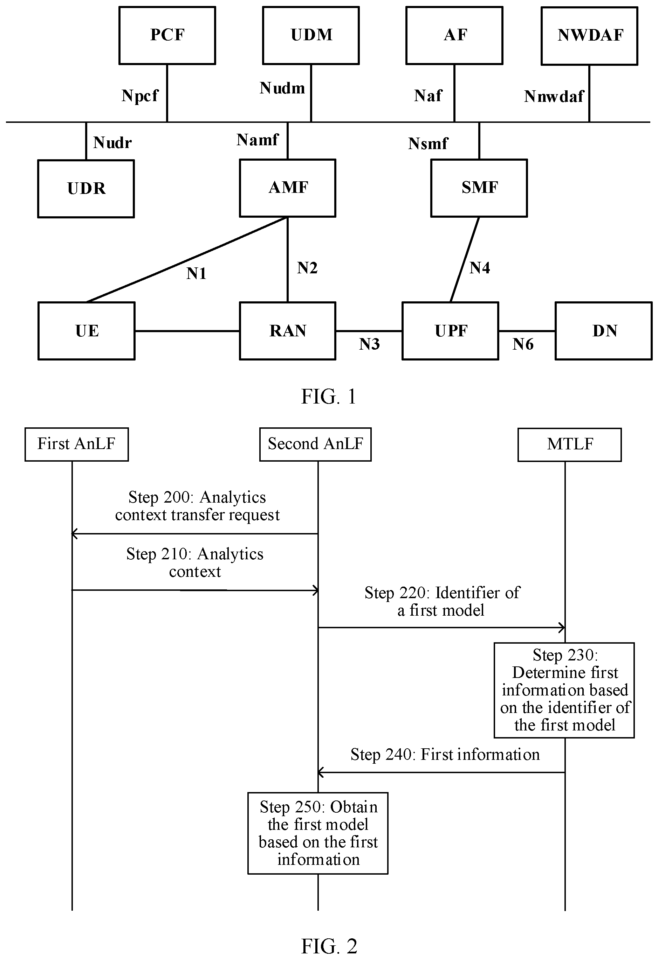

FIG. 1 is a diagram of a 5G network architecture based on a service-based architecture. The 5G network architecture shown in FIG. 1 may include a terminal device, an access network device, and a core network device. The terminal device accesses a data network (data network, DN) via the access network device and the core network device. The core network device includes a plurality of network functions (network function, NF) or network elements, for example, includes some or all of the following network elements: a unified data management (unified data management, UDM) network element, a unified data repository (unified data repository, UDR) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a network data analytics function (network data analytics function, NWDAF) network element, a network repository function (network repository function, NRF) network element (not shown in the figure), and the like.

The access network device may be a radio access network (radio access network, RAN) device, for example, a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, or an access node in a wireless fidelity (wireless fidelity, Wi-Fi) system; or may be a module or unit that completes some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technology and a specific device form that are used by the radio access network device are not limited in embodiments of this application.

The terminal device may be user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like.

The access network device and the terminal device may be at fixed locations, or may be movable. The access network device and the terminal device may be deployed on land, including an indoor device or an outdoor device, a handheld device, or a vehicle-mounted device; or may be deployed on a water surface; or may be deployed on a plane, a balloon, and a satellite in the air. Application scenarios of the access network device and the terminal device are not limited in embodiments of this application.

The following briefly describes some core network devices.

The AMF network element, AMF for short, includes functions such as mobility management, and access authentication/authorization. In addition, the AMF is also responsible for transferring a user policy between the terminal device and the PCF.

The SMF network element, SMF for short, includes functions such as execution of session management, execution of a control policy delivered by the PCF, UPF selection, and internet protocol (internet protocol, IP) address allocation for the terminal device.

The UPF network element, UPF for short, is used as an interface to the data network, and includes functions such as completion of user plane data forwarding, session/flow-level based charging statistics collection, and bandwidth limitation.

The UDM network element, UDM for short, includes functions such as execution of subscription data management, and user access authorization.

The UDR network element, UDR for short, includes functions such as storage and retrieval of subscription data, policy data, application data, and other types of data.

The NEF network element, NEF for short, is configured to support exposure of capabilities and events.

The AF network element, AF for short, transfers a requirement of an application side for a network side, for example, a quality of service (quality of service, QoS) requirement or user status event subscription. The AF may be a third-party functional entity or an application server deployed by an operator.

The PCF network element, PCF for short, includes policy control functions such as being responsible for charging at a session or service flow level, QoS bandwidth guarantee, mobility management, and terminal device policy decision-making.

The NRF network element, NRF for short, may be configured to: provide a network element discovery function, and provide, based on a request of another network element, network element information corresponding to a network element type. The NRF network element further provides a network element management service, for example, registration, update, and deregistration of a network element and subscription and push of a network element status.

The NWDAF network element, NWDAF for short, is mainly configured to: collect data (including one or more of terminal device data, access network device data, core network element data, and third-party application device data), where the data may be data of a terminal device, an access network device, a core network element, or a third-party application device, or may be data of the terminal device on the access network device, the core network element, or the third-party application device; and then perform data analytics based on the collected data, and output a data analytics result, for a network, a network management device, and an application to make a policy decision. The NWDAF may perform data analytics by using a machine learning model. In embodiments of this application, the NWDAF may be an independent network element, or may be co-located with another network element. For example, the NWDAF is disposed in the PCF network element or the AMF network element.

In the 3rd generation partnership project (3rd generation partnership project, 3GPP) release (Release) 17, a training function and an inference function of the NWDAF are split. One NWDAF may support only a model training function or a data inference function, or support both a model training function and a data inference function.

In this application, a model training function network element may be an NWDAF that supports the model training function, which may also be referred to as a training NWDAF or referred to as an NWDAF that supports a model training logical function (model training logical function, MTLF), referred to as an MTLF for short. For example, the training MTLF may perform model training based on obtained data, to obtain a trained model.

An analytics function network element may be an NWDAF that supports the data inference function, which may also be referred to as an inference NWDAF or referred to as an NWDAF that supports an analytics logical function (analytics logical function, AnLF), referred to as AnLF for short. For example, the AnLF may request a model from the MTLF via a model subscription (MLModelProvision_Subscribe) service or message. The model may be obtained by the MTLF through training based on data related to the model. Then, the AnLF may input data to the trained model, to obtain an analytics result or inference data.

It may be understood that the MTLF may be understood as an NWDAF that supports at least the model training function. In a possible implementation method, the MTLF may also support the data inference function. The AnLF may be understood as an NWDAF that supports at least the data inference function. In a possible implementation method, the AnLF may also support the model training function.

It may be understood that, the foregoing network elements are an example of an implementation. This application does not exclude that a network element or a device having a function of the foregoing network element has another name or another form in a 6G wireless communication system or an updated wireless communication system.

It may be understood that, the foregoing network elements or functions may be network elements in a hardware device, software functions running on dedicated hardware, or virtualized functions instantiated on a platform (for example, a cloud platform). In a possible implementation method, the network elements or the functions may be implemented by one device, may be jointly implemented by a plurality of devices, or may be one functional module in one device. This is not specifically limited in embodiments of this application.

In FIG. 1, Nudr, Npcf, Namf, Nudm, Nsmf, Naf, and Nnwdaf are respectively service-based interfaces provided by the UDR, the PCF, the AMF, the UDM, the SMF, the AF, and the NWDAF, and are used to invoke corresponding service-based operations.

The following describes basic technical concepts in this application.

### 1. Analytics identifier (analysis ID)

The analytics identifier may indicate an analytics business, which may also be referred to as an analytics service, briefly referred to as a service. The service is related to a model, in other words, a model may be used to execute the service. Alternatively, this is described as that the analytics identifier is related to a model, in other words, a model is used to execute a service corresponding to the analytics identifier.

Alternatively, it may be understood as that an MTLF is related to the analytics identifier, in other words, a model provided by an MTLF is used to support execution of a service corresponding to the analytics identifier. For example, the MTLF may be related to one or more analytics identifiers. It may be understood as that the MTLF may provide a model of a service corresponding to each of the one or more analytics identifiers. For example, if an MTLF 1 is related to an analytics identifier 1 and an analytics identifier 2, in other words, an MTLF 1 corresponds to an analytics identifier 1 and an analytics identifier 2, the MTLF 1 may provide a model of a service corresponding to the analytics identifier 1 and a model of a service corresponding to the analytics identifier 2.

### 2. Interoperability indicator (interoperability indicator)

For example, the interoperability indicator may correspond to an MTLF, or correspond to an analytics identifier, or correspond to an analytics identifier corresponding to an MTLF. Alternatively, this is described as that the interoperability indicator is related to an MTLF, or the interoperability indicator is related to an analytics identifier. The interoperability indicator may also be referred to as an interoperability indication, a machine learning (machine learning, ML) model interoperability indicator, or a model interoperability indicator (ML Model interoperability indicator).

The interoperability indicator includes a vendor list, which is also described as an NWDAF provider (or supplier) list. A vendor in the vendor list are allowed to retrieve or use a model provided by the MTLF. The interoperability indicator also indicates that the MTLF supports an NWDAF whose vendor is a vendor in the vendor list in requesting a model provided by the MTLF. The interoperability indicator also indicates that the vendor in the vendor list is allowed to obtain the model from the MTLF. The interoperability indicator also indicates that the MTLF allows the vendor in the vendor list to obtain the model from the MTLF.

The interoperability indicator is a list of MTLF providers. For example, the interoperability indicator represents a vendor identifier, or the interoperability indicator is associated with a vendor identifier. The interoperability indicator may be associated with the analytics identifier. For example, the interoperability indicator and the analytics identifier are in one-to-one correspondence, indicating that the MTLF allows the corresponding vendor or the MTLF included in the vendor to obtain the model corresponding to the analytics identifier, and/or indicating that the MTLF and an AnLF are allowed to interoperate with the model corresponding to the analytics identifier. Optionally, one MTLF may have one or more interoperability indicators. If there are a plurality of interoperability indicators, the plurality of interoperability indicators respectively correspond to different analytics identifiers. For example, an MTLF NF ID 1 corresponds to an analytics identifier 1 and an analytics identifier 2. An MTLF to which the MTLF NF ID 1 belongs has an interoperability indicator 1 and an interoperability indicator 2. The interoperability indicator 1 corresponds to the analytics identifier 1, and the interoperability indicator 2 corresponds to the analytics identifier 2. Optionally, if the MTLF to which the MTLF NF ID 1 belongs and an MTLF to which an MTLF NF ID 2 belongs support interoperations, the MTLF to which the MTLF NF ID 2 belongs may have the interoperability indicator 1 and the interoperability indicator 2, where the interoperability indicator 1 corresponds to the analytics identifier 1, and/or the interoperability indicator 2 corresponds to the analytics identifier 2. That is, MTLFs of a same vendor may have a same interoperability indicator for a same analytics identifier. In addition, if the MTLF to which the MTLF NF ID 1 belongs and the MTLF to which the MTLF NF ID 2 belongs belong to different vendors, the MTLF to which the MTLF NF ID 2 belongs may have an interoperability indicator 3 and an interoperability indicator 4, where the interoperability indicator 3 corresponds to the analytics identifier 1, and/or the interoperability indicator 4 corresponds to the analytics identifier 2. That is, MTLFs of a same vendor may have different interoperability indicators for a same analytics identifier.

For example, an analytics identifier 1 is related to a model 1, in other words, a model 1 is used to execute a service corresponding to the analytics identifier 1. The analytics identifier 1 is related to an interoperability indicator 1, in other words, the model 1 is related to the interoperability indicator 1. It is assumed that the interoperability indicator 1 includes an identifier of a vendor 1 and an identifier of a vendor 2, in other words, the model 1 can be provided for a vendor 1 and a vendor 2 to use. Alternatively, it may be understood as that if a vendor of an NWDAF is a vendor 1 or a vendor 2, the NWDAF may use the model 1.

For example, one MTLF may have one or more interoperability indicators. If there are a plurality of interoperability indicators, the plurality of interoperability indicators may correspond to different analytics identifiers. For example, an MTLF 1 corresponds to an analytics identifier 1 and an analytics identifier 2, where an interoperability indicator 1 corresponds to the analytics identifier 1, and an interoperability indicator 2 corresponds to the analytics identifier 2.

### 3. Model producer

The model producer is an entity that produces a model, or an entity that has a right to provide model information to another entity based on a network configuration. A consumer may obtain the model based on the model information. The model information includes but is not limited to a uniform resource locator (uniform resource locator, URL) of a model file, the model, and the like.

### 4. Vendor identifier

A vendor identifier (vendor ID) of a vendor (vendor) may also be represented as network element information, and identifies a vendor or a producer of a network element. For example, a vendor ID 1 identifies a vendor of an NWDAF network element.

The vendor identifier may identify a device vendor. One vendor identifier may correspond to one or more NWDAF device identifiers. For example, both an NWDAF NF ID 1 and an NWDAF NF ID 2 may correspond to a vendor identifier 1. To be specific, an MTLF to which the MTLF NF ID 1 belongs and an MTLF to which the MTLF NF ID 2 belongs belong to a same vendor, and a vendor identifier of the vendor is the vendor identifier 1.

Currently, it can be learned from a model authorization procedure that model transfer or use needs to be authorized by a model producer. Therefore, a source AnLF network element needs to be authorized by a model producer (namely, an MTLF network element that produces a model) to transfer the model to a third party. If the source AnLF network element directly carries an address of the model to a target AnLF (namely, the third party) via an analytics context, there is a security risk.

Based on the network system architecture shown in FIG. 1 and the content described in the foregoing related technologies, embodiments of this application provide several possible communication methods. The following uses an example in which the analytics function network element is an AnLF and the model training function network element is an MTLF for description.

This application provides a communication method. As shown in FIG. 2, the method includes the following steps.

Step 200: A second AnLF sends an analytics context transfer request to a first AnLF, and correspondingly, the first AnLF receives the analytics context transfer request from the second AnLF.

For example, the first AnLF provides, for a service consumer network element, a service corresponding to an analytics identifier, where an analytics subscription corresponding to the analytics identifier is associated with an analytics context identifier (analytics context identifier). If the first AnLF or the service consumer network element determines to select a target AnLF, that is, determines to transfer the analytics subscription from the first AnLF to the target AnLF, the target AnLF is triggered to send the analytics context transfer request to the first AnLF. The following uses an example in which the target AnLF is the second AnLF for description, and the first AnLF may also be referred to as a source AnLF.

For example, the analytics context transfer request includes the analytics context identifier, so that the first AnLF determines that the analytics subscription to be transferred is an analytics subscription associated with the analytics context identifier, and then determines an analytics context corresponding to the analytics context identifier.

For example, the analytics context identifier may be a subscription correlation identifier (subscription correlation ID), a set of a subscription permanent identifier (subscription permanent identifier, SUPI) and a correlation analytics ID for UE correlation analytics, or an analytics ID for NF correlation analytics.

Step 210: The first AnLF sends the analytics context to the second AnLF, and correspondingly, the second AnLF receives the analytics context from the first AnLF.

The analytics context includes an identifier of a first model and an identifier of a first MTLF. The first AnLF provides, for the service consumer network element via the first model, the service corresponding to the analytics identifier. The first MTLF corresponding to the identifier of the first MTLF is a producer of the first model. In other words, the first AnLF obtains ML model information from the first MTLF to provide the service corresponding to the analytics identifier. The ML model information may also be referred to as first information, and the first information is associated with the first model. The first information may include an ML model file address (for example, a URL or a fully qualified domain name (fully qualified domain name, FQDN), or an analytics data repository function (analytics data repository function, ADRF) ID or an ADRF set (set) ID). When the ML model information includes the ADRF ID or the ADRF set (set) ID, the first information may further include a storage transaction identifier (storage transaction ID). Optionally, the first information may include the identifier of the first model. Optionally, the first information may include an interoperability indicator corresponding to the analytics identifier corresponding to the first model of the MTLF. The first information may further include other content. This is not limited in this application. It may be understood that some content included in the first information can be used to obtain the first model, and the first information further includes other content, for example, related information used to describe the first model, model accuracy information, and model application scenario information.

The first AnLF obtains, from the first MTLF, the ML model information of a model for providing the service corresponding to the analytics identifier.

Step 220: The second AnLF sends the identifier of the first model to the first MTLF, and correspondingly, the first MTLF receives the identifier of the first model from the second AnLF.

For example, the second AnLF sends a model request message to the first MTLF, where the model request message includes the identifier of the first model.

The model request message may be a model provision subscribe (Nnwdaf_MLModelProvision_Subscribe) message.

For example, the second AnLF sends, based on the identifier of the first MTLF in the analytics context, the identifier of the first model to the first MTLF corresponding to the identifier of the first MTLF.

Step 230: The first MTLF determines the first information based on the identifier of the first model.

For example, the first MTLF determines whether the first model can be provided for the second AnLF, for example, performs indexing, based on the identifier of the first model, to a context for using the first model, to perform analytics and determining. For example, it is determined whether an area of the first model is changed. If determining to provide the first model for the second AnLF, the first MTLF determines the first information based on the identifier of the first model. If determining that the first model cannot be provided for the second AnLF, the first MTLF may return a rejection message, or return a new model to the second AnLF.

Step 240: The first MTLF sends the first information to the second AnLF. Correspondingly, the second AnLF receives the first information from the first MTLF.

For specific content of the first information, refer to the related descriptions in step 210.

Step 250: The second AnLF obtains the first model based on the first information.

For example, the second AnLF may obtain the first model based on the URL in the first information. Alternatively, the second AnLF may send a model obtaining request to an ADRF identified by the ADRF ID in the first information, and the ADRF may send the first model to the first AnLF.

According to the foregoing method, the analytics context obtained by the second AnLF includes the identifier of the first model and the identifier of the first MTLF, instead of directly including the first information. The second AnLF may obtain the first information from the first MTLF based on the identifier of the first model and the identifier of the first MTLF, so that the second AnLF can obtain the model that is used by the first AnLF network element, and security of obtaining the model can be improved.

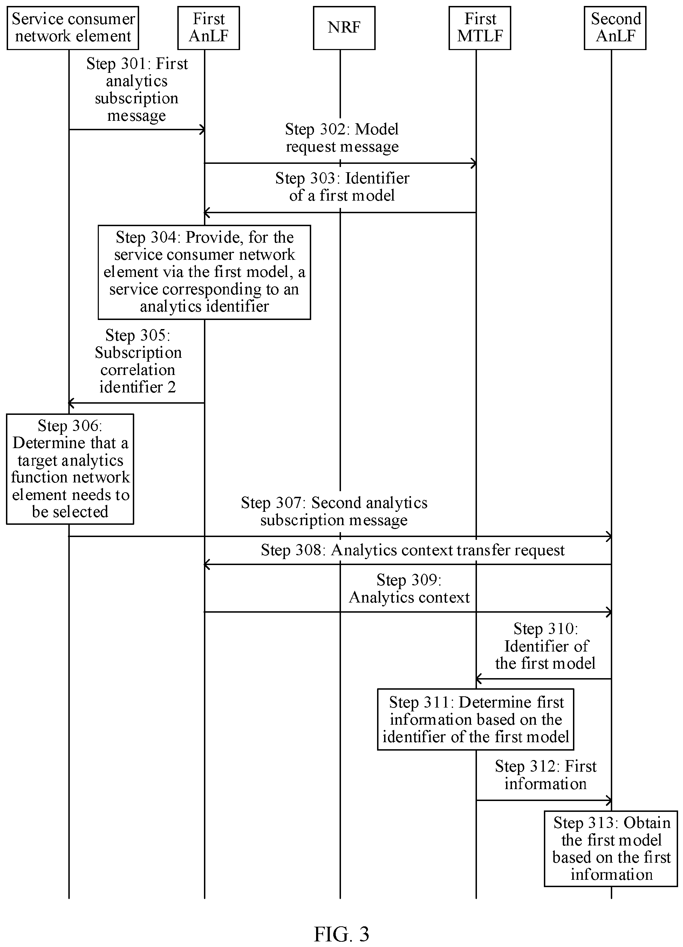

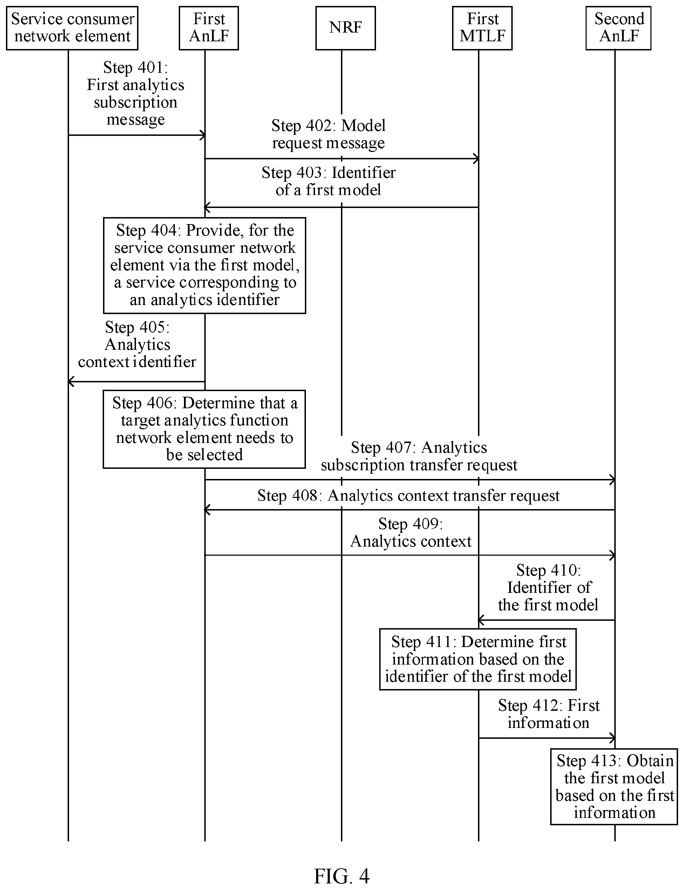

The following describes the embodiment shown in FIG. 2 with reference to FIG. 3 and FIG. 4. The following uses an example in which the analytics function network element is an AnLF, the model training function network element is an MTLF, and the network repository function network element is an NRF for description.

As shown in FIG. 3, a process in which a service consumer network element determines that a target AnLF needs to be selected, and triggers the target AnLF to send an analytics context transfer request to a first AnLF is specifically as follows.

Step 301: The service consumer network element sends a first analytics subscription message to the first AnLF. The first analytics subscription message includes an analytics identifier.

For example, the service consumer network element requests, via the first analytics subscription message, the first AnLF to provide, for the service consumer network element, a service corresponding to the analytics identifier. For example, the service consumer network element may be an AMF, an SMF, or another core network element.

For example, the analytics subscription message may be Nnwdaf_AnalyticsSubscription_Subscribe.

Step 302: The first AnLF sends a model request message to a first MTLF. The model request message includes the analytics identifier.

For example, the model request message is a model provision subscribe (Nnwdaf_MLModelProvision_Subscribe) message.

In a possible implementation, the first AnLF may obtain the first MTLF through a network element discovery procedure. For example, the first AnLF sends an NF discovery message 1 to the NRF. The NF discovery message 1 includes the analytics identifier. For example, the NF discovery message may be Nnrf_NF Discovery. The NF discovery message 1 is used to discover an MTLF, or is used to discover an NWDAF including an MTLF. The NRF determines the first MTLF based on the analytics identifier in the NF discovery message 1. The NRF sends an NF discovery response message 1 to the first AnLF. The NF discovery response message 1 includes information about the first MTLF, and the information about the first MTLF may include at least one of an identifier of the first MTLF, the analytics identifier, and a first interoperability indicator. The first interoperability indicator is an interoperability indicator corresponding to the analytics identifier of the first MTLF, or an interoperability indicator of the first MTLF. For example, the information about the first MTLF is NF information (profile) of the first MTLF.

It may be understood that the NRF may determine one or more MTLFs based on the analytics identifier in the NF discovery message 1. In this case, the NF discovery response message 1 may include information about the one or more MTLFs. The first MTLF may be understood as any one of the one or more MTLFs. The following merely uses the first MTLF as an example for description.

Step 303: The first MTLF sends an identifier of a first model to the first AnLF.

For example, the first MTLF determines the first model based on the analytics identifier in the model request message. The first model is used to provide the service corresponding to the analytics identifier.

In a possible implementation, the first MTLF may further send at least one of a subscription correlation identifier (subscription correlation ID), first information, and the first interoperability indicator to the first AnLF. For example, the subscription correlation identifier is a subscription correlation identifier 1. For related descriptions of the first information, refer to step 210. The foregoing information may be carried in one or more messages. This is not limited in this application.

It may be understood that the first MTLF is a producer of a model corresponding to the identifier of the first model.

It may alternatively be understood that the first MTLF is a provider of a model corresponding to the identifier of the first model.

It may alternatively be understood that the first MTLF is a provider of first information of a model corresponding to the identifier of the first model.

It may alternatively be understood that the first MTLF provides the first model and/or information about the first model for the first AnLF.

It may be alternatively understood that the first MTLF provides the first model and/or information about the first model for the first AnLF, and the first model and/or the information about the first model are/is used to provide an analytics service corresponding to the analytics identifier.

The subscription correlation identifier is associated with a model subscription corresponding to the analytics identifier, and identify a model subscription between the first AnLF and the first MTLF. In addition, the first MTLF stores a correspondence between the subscription correlation identifier and the first information.

Step 304: The first AnLF provides, for the service consumer network element via the first model, the service corresponding to the analytics identifier.

For example, the first AnLF obtains the first model based on the first information, and provides, for the service consumer network element via the first model, the service corresponding to the analytics identifier. In a possible case, the first AnLF obtains the model based on the first information. For example, the first AnLF obtains the model via a URL that is of the model and that is in the first information. For another example, via an ADRF in the first information, the first AnLF obtains a URL of the first model from the ADRF, and then obtains the first model via the URL. All the foregoing cases may be understood as that the first AnLF obtains the first model from the first MTLF. Alternatively, it may be understood as that the first AnLF obtains the information about the first model from the first MTLF.

It may be understood that the first AnLF obtains the first model from the first MTLF. Alternatively, it may be understood as that the first AnLF obtains the information about the first model from the first MTLF.

It may alternatively be understood that the first AnLF obtains, from the first MTLF, the information about the first model used for analytics. Alternatively, it may be understood as that the first AnLF obtains, from the first MTLF, the first model used for analytics, or it may be understood as that the first AnLF obtains the first model and/or the information about the first model for the analytics service corresponding to the analytics identifier.

It may alternatively be understood that the first AnLF obtains the first model from the first MTLF, and provides, via the first model, the service corresponding to the analytics identifier. Step 305: The first AnLF sends, to the service consumer network element, an analytics context identifier, for example, a subscription correlation identifier 2 (subscription correlation ID 2).

The analytics context identifier is associated with an analytics subscription corresponding to the analytics identifier, and identify an analytics subscription between the first AnLF and the service consumer network element. In addition, the first AnLF stores a correspondence (or an association relationship) between the analytics context identifier and at least one of the identifier of the first model, the subscription correlation identifier, the first information, and the identifier of the first MTLF.

Step 306: The service consumer network element determines that the target AnLF is selected.

For example, the service consumer network element may determine, based on internal logic or an external trigger condition, that the target AnLF is selected. For example, the service consumer network element starts to request related analytics, or receives a subscription termination request for existing analytics, and then selects a new AnLF to continue to serve the service consumer network element.

In a possible implementation, the service consumer network element may determine the target AnLF through a network element discovery procedure.

For example, the service consumer network element sends an NF discovery message 2 to the NRF. The NF discovery message 2 is used to discover an AnLF, or is used to discover an NWDAF including an AnLF. The NRF determines one or more AnLFs based on the NF discovery message 2. The NRF sends an NF discovery response message 2 to the service consumer network element. The NF discovery response message 2 includes information about the one or more AnLFs. The service consumer network element determines the target AnLF based on the information about the one or more AnLFs. The following merely uses an example in which the target AnLF is a second AnLF for description, and the second AnLF is one of the one or more AnLFs.

Step 307: The service consumer network element sends a second analytics subscription message to the second AnLF. The second analytics subscription message includes the analytics identifier.

For example, the second analytics subscription message further includes analytics subscription information. The analytics subscription information includes at least one of an identifier of the first AnLF, an SUPI, analytics filter information for UE-related analytics, and the analytics context identifier.

Step 308: The second AnLF sends the analytics context transfer request to the first AnLF.

For example, the second AnLF determines the first AnLF based on the analytics subscription information, where the analytics context transfer request includes the analytics context identifier.

Step 309: The first AnLF sends an analytics context to the second AnLF, where the analytics context includes the identifier of the first model and the identifier of the first MTLF.

For example, there is a correspondence between the analytics context identifier, and the identifier of the first model and the identifier of the first MTLF, and the first AnLF determines, based on the analytics context identifier, the analytics context corresponding to the analytics context identifier. The analytics context includes the identifier of the first model and the identifier of the first MTLF.

In a possible implementation, before the first AnLF sends the analytics context to the second AnLF, optionally, the analytics context transfer request further includes an identifier of a vendor of the second AnLF. Then, the first AnLF may determine, based on the first interoperability indicator, whether the identifier of the vendor of the second AnLF belongs to the first interoperability indicator, or this is described as determining whether the first interoperability indicator includes the identifier of the vendor of the second AnLF. That is, it can be learned from the foregoing descriptions that the first interoperability indicator includes a vendor identifier list, and the first AnLF determines whether the identifier of the vendor of the second AnLF belongs to the vendor identifier list. The first AnLF may obtain the first interoperability indicator from the first MTLF (refer to step 303) or from the NRF (refer to step 302). In a possible implementation, before sending the analytics context to the second AnLF, the first AnLF may further send a first request message to the first MTLF, where the first request message is used to request the first MTLF to agree that the first AnLF provides the identifier of the first model for the second AnLF. Further, the first MTLF sends a first response message to the first AnLF, where the first response message indicates whether it is agreed that the first AnLF provides the identifier of the first model for the second AnLF. For example, if the first MTLF agrees that the first AnLF provides the identifier of the first model for the second AnLF, the first MTLF sends the first response message to the first AnLF, where the first response message indicates that it is agreed that the first AnLF provides the identifier of the first model for the second AnLF. If the first MTLF does not agree that the first AnLF provides the identifier of the first model for the second AnLF, the first MTLF sends the first response message to the first AnLF, where the first response message indicates that it is not agreed that the first AnLF provides the identifier of the first model for the second AnLF. A specific manner in which the first MTLF determines whether to agree that the first AnLF provides the identifier of the first model for the second AnLF is not limited in this application.

The first request message may be further described as requesting to allow the first AnLF to provide the identifier of the first model for the second AnLF, or requesting to authorize the first AnLF to provide the identifier of the first model for the second AnLF.

For example, the first request message may include at least one of the subscription correlation identifier, the identifier of the first model, an identifier of the second AnLF, or the identifier of the vendor of the second AnLF. If the first request message includes the identifier of the vendor of the second AnLF, the first MTLF may determine whether the identifier of the vendor of the second AnLF belongs to the first interoperability indicator. If the identifier of the vendor of the second AnLF belongs to the first interoperability indicator, it is agreed that the first AnLF provides the identifier of the first model for the second AnLF. If the identifier of the vendor of the second AnLF does not belong to the first interoperability indicator, it is not agreed that the first AnLF provides the identifier of the first model for the second AnLF.

Step 310: The second AnLF sends the identifier of the first model to the first MTLF.

For example, the second AnLF sends a model provision subscribe message to the first MTLF, where the model provision subscribe includes the identifier of the first model.

Step 311: The first MTLF determines the first information based on the identifier of the first model.

Step 312: The first MTLF sends the first information to the second AnLF.

Step 313: The second AnLF obtains the first model based on the first information.

For step 308 to step 313, refer to step 200 to step 250. Details are not described herein again.

As shown in FIG. 4, a process in which a first AnLF determines to select a target AnLF, and triggers the target AnLF to send an analytics context transfer request to the first AnLF is specifically as follows.

For step 401 to step 405, refer to step 301 to step 305.

Step 406: The first AnLF determines that the target AnLF needs to be selected.

For example, if determining, based on a network element status, that the first AnLF is in an overloaded state, or is close to or exceeds a service upper limit, or the first AnLF prepares to close or stop the provision of the service outside, the first AnLF determines that the target AnLF is selected.

In a possible implementation, the first AnLF may determine the target AnLF through a network element discovery procedure.

For example, the first AnLF sends an NF discovery message 2 to an NRF. The NF discovery message 2 is used to discover an AnLF, or is used to discover an NWDAF including an AnLF. The NRF determines one or more AnLFs based on the NF discovery message 2. The NRF sends an NF discovery response message 2 to the first AnLF. The NF discovery response message 2 includes information about the one or more AnLFs. The first AnLF determines the target AnLF based on the information about the one or more AnLFs. The following merely uses an example in which the target AnLF is a second AnLF for description, and the second AnLF is one of the one or more AnLFs.

Step 407: The first AnLF sends an analytics subscription transfer request to the second AnLF.

For example, the analytics subscription transfer request further includes analytics subscription information. The analytics subscription information includes at least one of an identifier of the first AnLF, an SUPI, analytics filter information for UE-related analytics, and an analytics context identifier.

For step 408 to step 413, refer to step 308 to step 313.

It can be learned from FIG. 3 and FIG. 4 that the service consumer network element or the first AnLF may determine to select the target AnLF, and then trigger the target AnLF to send the analytics context transfer request to the first AnLF. The following embodiments are described by using only an example in which the service consumer network element determines to select the target AnLF and then triggers the second AnLF to send the analytics context transfer request to the first AnLF. It may be understood that the following embodiments are also applicable to a scenario in which the first AnLF determines to select the target AnLF and then triggers the second AnLF sends the analytics context transfer request to the first AnLF.

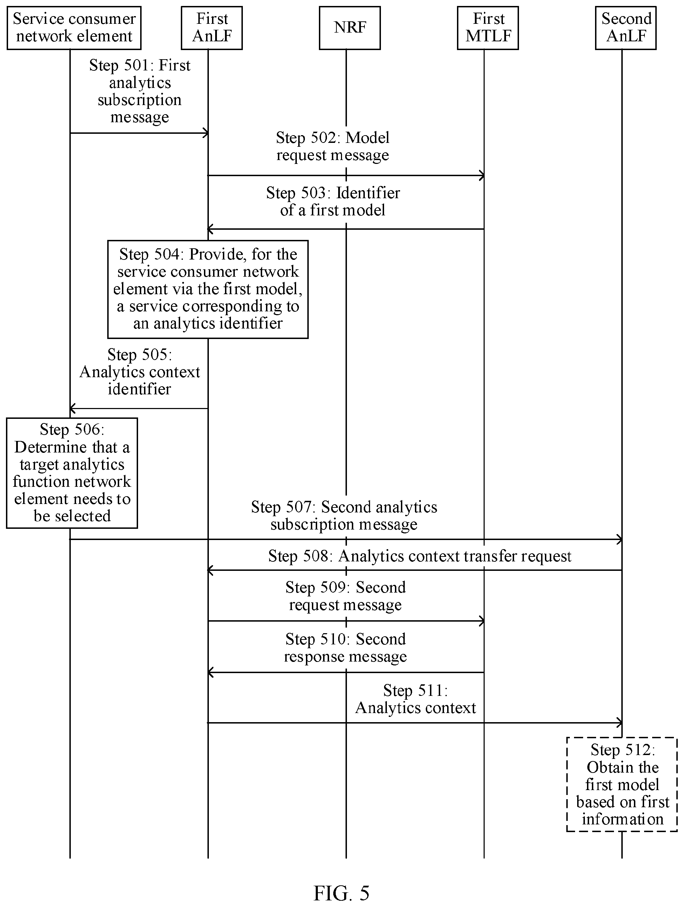

This application further provides a communication method. As shown in FIG. 5, the method includes the following steps.

For step 501 to step 507, refer to step 301 to step 307.

Step 508: A second AnLF sends an analytics context transfer request to a first AnLF.

For example, the analytics context transfer request includes an analytics context identifier.

Step 509: The first AnLF sends a second request message to a first MTLF, where the second request message is used to request the MTLF to agree that the first AnLF provides first information for the second AnLF.

The second request message may be further described as requesting to allow the first AnLF to provide the first information for the second AnLF, or requesting to authorize the first AnLF to provide the first information for the second AnLF.

Alternatively, the second request message may be described as being used to request the MTLF to agree that the first AnLF provides a first model for the second AnLF, being used to request to allow the first AnLF to provide a first model for the second AnLF, or being used to request to authorize the first AnLF to provide a first model for the second AnLF.

For example, there is a correspondence between the analytics context identifier, and an identifier of the first model, an identifier of the first MTLF, and the first information, and the first AnLF determines, based on the analytics context identifier, the identifier of the first model and the identifier of the first MTLF that correspond to the analytics context identifier, and determines that an analytics context corresponding to the analytics context identifier includes the first information. The first information is associated with the first model. The first information may include an ML model file address (for example, a URL or an FQDN), or an ADRF ID or an ADRF set ID. When the ML model information includes the ADRF ID or the ADRF set ID, the first information may further include a storage transaction identifier. Optionally, the first information may include the identifier of the first model. The first information may further include other content. This is not limited in this application. It may be understood that some content included in the first information can be used to obtain the first model, and the first information further includes other content, for example, related information used to describe the first model.

It may also be understood as that the first AnLF does not directly provide the first information for the second AnLF, or it may be understood as that the first AnLF needs to obtain permission or authorization of the first MTLF before sending the first information to the second AnLF.

For example, the second request message may include at least one of a subscription correlation identifier, the identifier of the first model, an identifier of the second AnLF, or an identifier of a vendor of the second AnLF.

Step 510: The first MTLF sends a second response message to the first AnLF, where a first response message indicates that it is agreed that the first AnLF provides the first information for the second AnLF.

For example, if the first MTLF agrees that the first AnLF provides the first information for the second AnLF, the first MTLF sends the second response message to the first AnLF, where the second response message indicates that it is agreed that the first AnLF provides the first information for the second AnLF. If the first MTLF does not agree that the first AnLF provides the first information for the second AnLF, the second response message indicates that it is not agreed that the first AnLF provides the first information for the second AnLF. How the first MTLF determines whether to agree that the first AnLF provides the first information for the second AnLF is not limited in this application. The following merely uses an example in which the second response message indicates that it is agreed that the first AnLF provides the first information for the second AnLF for description.

Step 511: The first AnLF sends the analytics context to the second AnLF. The analytics context includes the first information and/or a model file of the first model.

Optionally, step 512: The second AnLF obtains the first model based on the first information.

According to the foregoing method, the first MTLF authorizes the first AnLF to provide the first information, so that the analytics context sent by the first AnLF to the second AnLF may include the first information. In this way, the second AnLF can obtain the model that is used by the first AnLF network element, and security of obtaining the model can be improved.

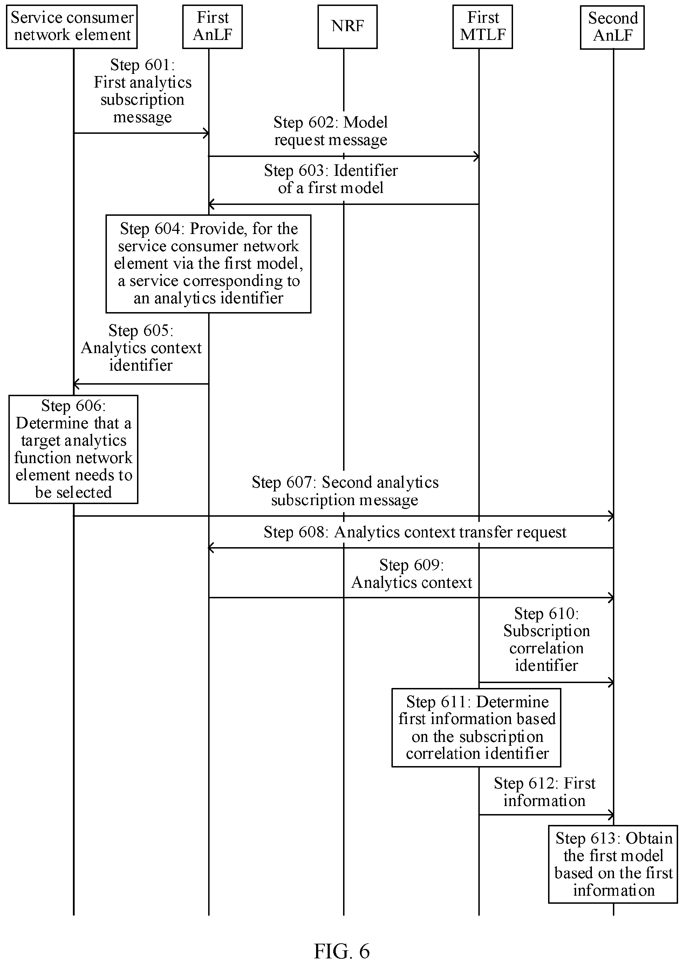

This application further provides a communication method. As shown in FIG. 6, the method includes the following steps.

For step 601 to step 607, refer to step 301 to step 307.

Step 608: A second AnLF sends an analytics context transfer request to a first AnLF.

For example, the analytics context transfer request includes an analytics context identifier.

Step 609: The first AnLF sends the analytics context to the second AnLF. The analytics context includes a correlation identifier and an identifier of a first MTLF. In this case, the correlation identifier is a subscription correlation identifier.

For example, there is a correspondence between the analytics context identifier, and the subscription correlation identifier and the identifier of the first MTLF, and the first AnLF determines, based on the analytics context identifier, the analytics context corresponding to the analytics context identifier. The analytics context includes the subscription correlation identifier and the identifier of the first MTLF.

With reference to step 305, it can be learned that the first AnLF stores a correspondence between the analytics context identifier and the subscription correlation identifier, and therefore, may determine the subscription correlation identifier based on the analytics context identifier.

Step 610: The second AnLF sends the subscription correlation identifier to the first MTLF.

Step 611: The first MTLF determines first information based on the subscription correlation identifier.

It can be learned from step 303 that the first MTLF stores a correspondence between the subscription correlation identifier and the first information. Therefore, the first MTLF may determine the first information based on the subscription correlation identifier.

Step 612: The first MTLF sends the first information to the second AnLF.

Step 613: The second AnLF obtains a first model based on the first information.

According to the foregoing method, the second AnLF obtains the subscription correlation identifier and the identifier of the first MTLF via the analytics context, instead of directly obtaining the first information. The second AnLF may obtain the first information from the first MTLF based on the subscription correlation identifier and information about the first MTLF, so that the second AnLF can obtain the model used by the first AnLF network element, and security of obtaining the model can be improved.

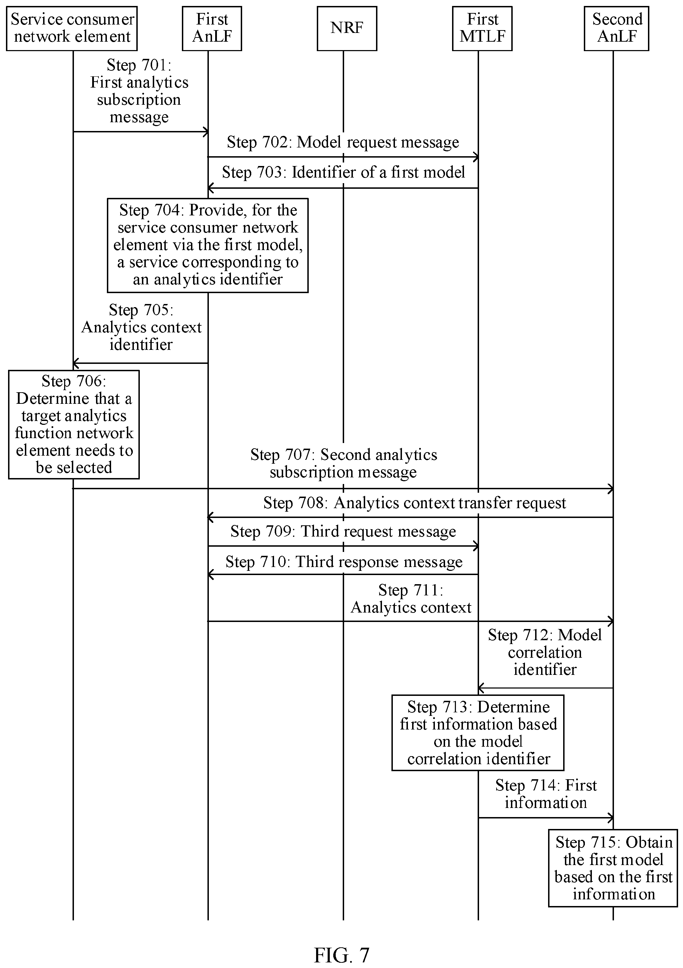

This application further provides a communication method. As shown in FIG. 7, the method includes the following steps.

For step 701 to step 707, refer to step 301 to step 307.

Step 708: A second AnLF sends an analytics context transfer request to a first AnLF.

For example, the analytics context transfer request includes an analytics context identifier.

Step 709: The first AnLF sends a third request message to a first MTLF, where the third request message includes an identifier of a first model.

The third request message is used to request the first MTLF to allocate the identifier associated with the first model.

For example, there is a correspondence between the analytics context identifier, and the identifier of the first model and an identifier of the first MTLF, and the first AnLF determines, based on the analytics context identifier, the identifier of the first model and the identifier of the first MTLF that correspond to the analytics context identifier.

Step 710: The first MTLF sends a third response message to the first AnLF.

For example, the first MTLF generates a correlation identifier for the first information, and stores a correspondence between the correlation identifier and the first information.

The third response message includes a correlation identifier and the identifier of the first MTLF. In this case, the correlation identifier is a correlation identifier associated with the first information, and may also be referred to as a model correlation identifier or a model information correlation identifier. The following uses the model correlation identifier as an example for description.

Step 711: The first AnLF sends an analytics context to the second AnLF. The analytics context includes the model correlation identifier and the identifier of the first MTLF.

Step 712: The second AnLF sends the model correlation identifier to the first MTLF.

Step 713: The first MTLF determines first information based on the model correlation identifier.

It can be learned from step 710 that the first MTLF stores a correspondence between the model correlation identifier and the first model. Therefore, the first MTLF may determine the first information based on the model correlation identifier.

Step 714: The first MTLF sends the first information to the second AnLF.

Step 715: The second AnLF obtains the first model based on the first information.

According to the foregoing method, the second AnLF obtains the model correlation identifier and the identifier of the first MTLF via the analytics context, instead of directly obtaining the first information. The second AnLF may obtain the first information from the first MTLF based on the model correlation identifier and information about the first MTLF, so that the second AnLF can obtain the model used by the first AnLF network element, and security of obtaining the model can be improved.

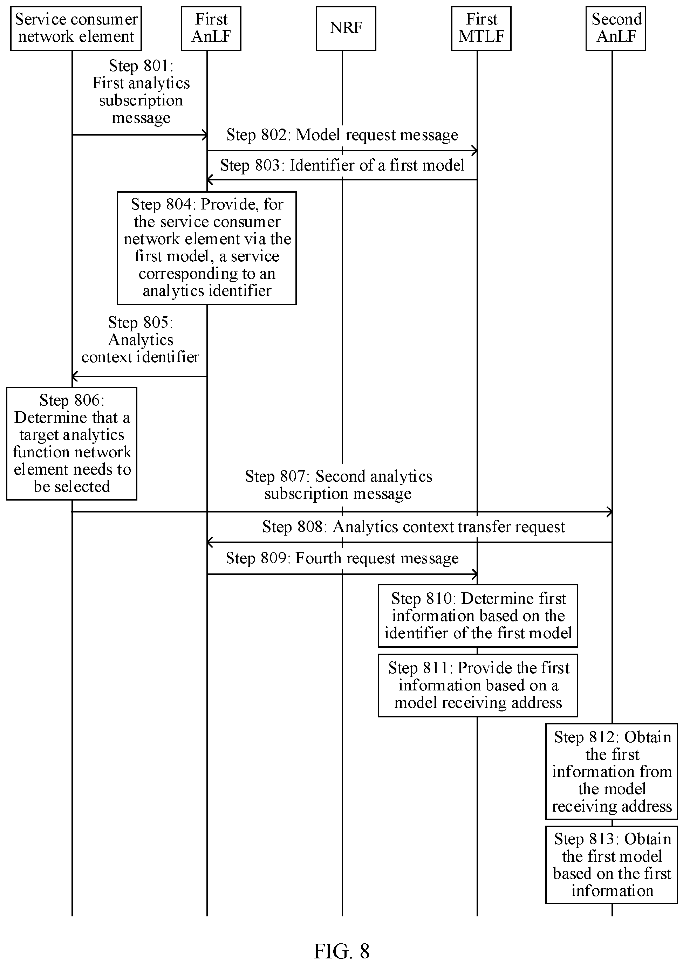

This application further provides a communication method. As shown in FIG. 8, the method includes the following steps.

For step 801 to step 807, refer to step 301 to step 307.

Step 808: A second AnLF sends an analytics context transfer request to a first AnLF.

For example, the analytics context transfer request includes an analytics context identifier and a model receiving address.

Step 809: The first AnLF sends a fourth request message to the first MTLF, where the fourth request message includes a model receiving address and an identifier of a first model.

For example, there is a correspondence between the analytics context identifier, and the identifier of the first model and an identifier of the first MTLF, and the first AnLF determines, based on the analytics context identifier, the identifier of the first model and the identifier of the first MTLF that correspond to the analytics context identifier.

The fourth request message is used to request the first MTLF to provide first information based on the model receiving address.

Step 810: A model training function network element determines the first information based on the identifier of the first model.

Step 811: The first MTLF provides the first information based on the model receiving address.

Step 812: The second analytics function network element obtains the first information based on the model receiving address.

Step 813: The second analytics function network element obtains the first model based on the first information.

According to the foregoing method, the second AnLF provides the model receiving address, and the first MTLF provides the first information based on the model receiving address, so that the second AnLF can obtain the model that is used by the first AnLF network element, and security of obtaining the model can be improved.

It may be understood that, to implement functions in the foregoing embodiments, the first analytics function network element, the model training function network element, and the second analytics function network element include corresponding hardware structures and/or software modules for performing the functions. A person skilled in the art should be easily aware that, in combination with units and method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

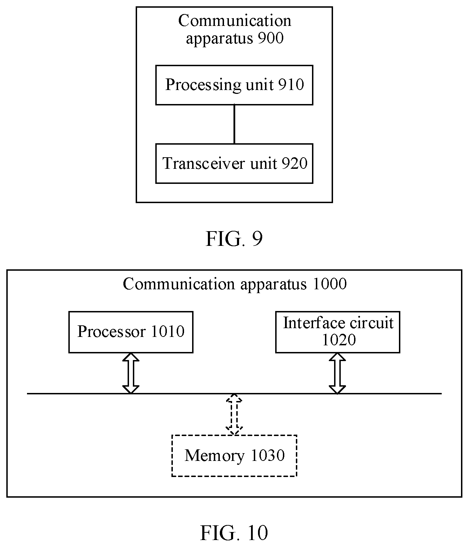

FIG. 9 and FIG. 10 each are a diagram of a structure of a possible communication apparatus according to an embodiment of this application. These communication apparatuses may be configured to implement a function of the first analytics function network element, the model training function network element, or the second analytics function network element in the foregoing method embodiments, and therefore can also achieve beneficial effects of the foregoing method embodiments.

As shown in FIG. 9, the communication apparatus 900 includes a processing unit 910 and a transceiver unit 920. The communication apparatus 900 is configured to implement a function of the first analytics function network element, the model training function network element, or the second analytics function network element in the foregoing method embodiments.

When the communication apparatus 900 is configured to implement the function of the first analytics function network element in the foregoing method embodiments:
the processing unit 910 invokes the transceiver unit 920 to perform the following operations: receiving an analytics context transfer request from a second analytics function network element; and sending an analytics context to the second analytics function network element, where the analytics context includes an identifier of a first model and an identifier of a model training function network element.

In a possible implementation, the transceiver unit 920 is configured to receive first information from the model training function network element, where the first information is associated with the first model.

In a possible implementation, the first information includes the identifier of the model training function network element.

In a possible implementation, before receiving the analytics context transfer request from the second analytics function network element, the processing unit 910 is configured to provide, via the first model, a service corresponding to an analytics identifier; and the transceiver unit 920 is configured to send an analytics subscription transfer request to the second analytics function network element, where the analytics subscription transfer request includes the analytics identifier.

In a possible implementation, the analytics context transfer request includes an identifier of a vendor of the second analytics function network element. Before sending the analytics context to the second analytics function network element, the transceiver unit 920 is configured to obtain a first interoperability indicator, where the first interoperability indicator is an interoperability indicator corresponding to the analytics identifier of the model training function network element, or the first interoperability indicator is an interoperability indicator of the model training function network element; and the processing unit 910 is configured to determine that the first interoperability indicator includes the identifier of the vendor of the second analytics function network element.

In a possible implementation, the transceiver unit 920 is configured to obtain the first interoperability indicator from the model training function network element or a network repository function network element.

In a possible implementation, before receiving the analytics context transfer request from the second analytics function network element, the transceiver unit 920 is configured to: send a model request message to the model training function network element, where the model request message includes the analytics identifier; and receive the identifier of the first model from the model training function network element.

In a possible implementation, before sending the analytics context to the second analytics function network element, the transceiver unit 920 is configured to: send a first request message to the model training function network element, where the first request message is used to request the model training function network element to agree that the first analytics function network element provides the identifier of the first model for the second analytics function network element; and receive a first response message from the model training function network element, where the first response message indicates that it is agreed that the first analytics function network element provides the identifier of the first model for the second analytics function network element.

When the communication apparatus 900 is configured to implement the function of the second analytics function network element in the foregoing method embodiments:
the processing unit 910 invokes the transceiver unit 920 to perform the following operations: sending an analytics context transfer request to a first analytics function network element; receiving an analytics context from the first analytics function network element, where the analytics context includes an identifier of a first model and an identifier of a model training function network element; sending the identifier of the first model to the model training function network element; and receiving first information from the model training function network element, where the first information is associated with the first model.

In a possible implementation, the first information includes the identifier of the model training function network element.

In a possible implementation, the analytics context transfer request includes an identifier of a vendor of the second analytics function network element.

In a possible implementation, before sending the analytics context transfer request to the first analytics function network element, the transceiver unit 920 is configured to: receive an analytics subscription transfer request from the first analytics function network element, where the analytics subscription transfer request includes analytics subscription information; and determine, for the second analytics function network element, the first analytics function network element based on the analytics subscription information.

In a possible implementation, before sending the analytics context transfer request to the first analytics function network element, the second analytics function network element receives an analytics subscription request from a service consumer network element, where the analytics subscription request includes analytics subscription information. The processing unit 910 is configured to determine the first analytics function network element based on the analytics subscription information.

When the communication apparatus 900 is configured to implement the function of the model training function network element in the foregoing method embodiments:
the transceiver unit 920 is configured to receive an identifier of a first model from a second analytics function network element; the processing unit 910 is configured to determine first information based on the identifier of the first model, where the first information is associated with the first model; and the transceiver unit 920 is configured to send the first information to the second analytics function network element.

In a possible implementation, before receiving the identifier of the first model from the second analytics function network element, the transceiver unit 920 is configured to: receive a first request message from a first analytics function network element, where the first request message is used to request the model training function network element to agree that the first analytics function network element provides the identifier of the first model for the second analytics function network element; and send a first response message to the first analytics function network element, where the first response message indicates that it is agreed that the first analytics function network element provides the identifier of the first model for the second analytics function network element.

In a possible implementation, the transceiver unit 920 is configured to: receive a model request message from the first analytics function network element, where the model request message includes an analytics identifier; and send the identifier of the first model to the first analytics function network element, where the first model is used to provide a service corresponding to the analytics identifier.

In a possible implementation, the transceiver unit 920 is configured to send a first interoperability indicator to the first analytics function network element, where the first interoperability indicator is an interoperability indicator corresponding to the analytics identifier of the model training function network element, or the first interoperability indicator is an interoperability indicator of the model training function network element.

In a possible implementation, before receiving the identifier of the first model from the second analytics function network element, the transceiver unit 920 is configured to send the first information to the first analytics function network element, where the first information is associated with the first model.

In a possible implementation, the first information includes an identifier of the model training function network element.

For more detailed descriptions of the processing unit 910 and the transceiver unit 920, directly refer to the related descriptions in the foregoing method embodiments. Details are not described herein again.

As shown in FIG. 10, the communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions to be executed by the processor 1010, store input data required for running instructions by the processor 1010, or store data generated after the processor 1010 runs instructions.

When the communication apparatus 1000 is configured to implement the method shown in FIG. 5, the processor 1010 is configured to implement a function of the processing unit 910, and the interface circuit 1020 is configured to implement a function of the transceiver unit 920.

It should be noted that the processor in this embodiment of this application may be a central processing unit (Central Processing Unit, CPU), another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any conventional processor.

This application provides another example of an apparatus. The notification apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. For example, the communication apparatus includes a processor and a memory. As shown in FIG. 10, the communication apparatus 1000 includes a processor 1010 and a memory 1030. The processor 1010 is coupled to the memory 1030. The memory 1030 stores instructions. When the instructions stored in the memory 1030 are executed by the processor 1010, the communication apparatus 1000 performs the method performed by each network element in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium or write information into the storage medium. The storage medium may alternatively be a component of the processor. The processor and the storage medium may be disposed in the ASIC. In addition, the ASIC may be located in the foregoing network element. The processor and the storage medium may alternatively exist in the foregoing network element as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logic conflict occurs, terms and/or descriptions in different embodiments are consistent and may be mutually referenced, and technical features in different embodiments may be combined based on an internal logical relationship thereof, to form a new embodiment.

In this application, "at least one" refers to one or more, and "a plurality of" refers to two or more. "And/or" describes an association relationship between associated objects, and indicates that three relationships may exist. For example, A and/or B may indicate the following three cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving, by a first analytics function network element, an analytics context transfer request from a second analytics function network element; and
sending, by the first analytics function network element, an analytics context to the second analytics function network element, wherein the analytics context comprises an identifier of a first model and an identifier of a model training function network element.

2. The method according to claim 1, further comprising:
receiving, by the first analytics function network element, first information from the model training function network element, wherein the first information is associated with the first model.

3. The method according to claim 2, wherein the first information comprises the identifier of the model training function network element.

4. The method according to any one of claims 1 to 3, wherein the model training function network element is a producer of the first model.

5. The method according to any one of claims 1 to 4, wherein before receiving, by the first analytics function network element, the analytics context transfer request from the second analytics function network element, the method further comprises:
providing, by the first analytics function network element via the first model, a service corresponding to an analytics identifier; and
sending, by the first analytics function network element, an analytics subscription transfer request to the second analytics function network element, wherein the analytics subscription transfer request comprises the analytics identifier.

6. The method according to claim 5, wherein before sending, by the first analytics function network element, the analytics context to the second analytics function network element, the method further comprises:
obtaining, by the first analytics function network element, a first interoperability indicator, wherein the first interoperability indicator is an interoperability indicator corresponding to the analytics identifier of the model training function network element, or the first interoperability indicator is an interoperability indicator of the model training function network element; and
determining, by the first analytics function network element, that the first interoperability indicator comprises an identifier of a vendor of the second analytics function network element.

7. The method according to claim 6, wherein the analytics context transfer request comprises the identifier of the vendor of the second analytics function network element.

8. The method according to claim 6, wherein obtaining, by the first analytics function network element, the first interoperability indicator comprises:
obtaining, by the first analytics function network element, the first interoperability indicator from the model training function network element or a network repository function network element.

9. The method according to claim 5 or 6, wherein before receiving, by the first analytics function network element, the analytics context transfer request from the second analytics function network element, the method further comprises:
sending, by the first analytics function network element, a model request message to the model training function network element, wherein the model request message comprises the analytics identifier; and
receiving, by the first analytics function network element, the identifier of the first model from the model training function network element.

10. The method according to any one of claims 1 to 9, wherein before sending, by the first analytics function network element, the analytics context to the second analytics function network element, the method further comprises:
sending, by the first analytics function network element, a first request message to the model training function network element, wherein the first request message is used to request the model training function network element to agree that the first analytics function network element provides the identifier of the first model for the second analytics function network element; and
receiving, by the first analytics function network element, a first response message from the model training function network element, wherein the first response message indicates that it is agreed that the first analytics function network element provides the identifier of the first model for the second analytics function network element.

11. A communication method, wherein the method comprises:
sending, by a second analytics function network element, an analytics context transfer request to a first analytics function network element;
receiving, by the second analytics function network element, an analytics context from the first analytics function network element, wherein the analytics context comprises an identifier of a first model and an identifier of a model training function network element;
sending, by the second analytics function network element, the identifier of the first model to the model training function network element; and
receiving, by the second analytics function network element, first information from the model training function network element, wherein the first information is associated with the first model.

12. The method according to claim 11, wherein the first information comprises the identifier of the model training function network element.

13. The method according to claim 11 or 12, wherein the analytics context transfer request comprises an identifier of a vendor of the second analytics function network element.

14. The method according to any one of claims 11 to 13, wherein before sending, by the second analytics function network element, the analytics context transfer request to the first analytics function network element, the method further comprises:
receiving, by the second analytics function network element, an analytics subscription transfer request from the first analytics function network element, wherein the analytics subscription transfer request comprises analytics subscription information; and
determining, by the second analytics function network element, the first analytics function network element based on the analytics subscription information.

15. The method according to any one of claims 11 to 13, wherein before sending, by the second analytics function network element, the analytics context transfer request to the first analytics function network element, the method further comprises:
receiving, by the second analytics function network element, an analytics subscription request from a service consumer network element, wherein the analytics subscription request comprises analytics subscription information; and
determining, by the second analytics function network element, the first analytics function network element based on the analytics subscription information.

16. A communication method, wherein the method comprises:
receiving, by a model training function network element, an identifier of a first model from a second analytics function network element;
determining, by the model training function network element, first information based on the identifier of the first model, wherein the first information is associated with the first model; and
sending, by the model training function network element, the first information to the second analytics function network element.

17. The method according to claim 16, wherein before receiving, by the model training function network element, the identifier of the first model from the second analytics function network element, the method further comprises:
receiving, by the model training function network element, a first request message from a first analytics function network element, wherein the first request message is used to request the model training function network element to agree that the first analytics function network element provides the identifier of the first model for the second analytics function network element; and
sending, by the model training function network element, a first response message to the first analytics function network element, wherein the first response message indicates that it is agreed that the first analytics function network element provides the identifier of the first model for the second analytics function network element.

18. The method according to claim 16 or 17, further comprising:
receiving, by the model training function network element, a model request message from the first analytics function network element, wherein the model request message comprises an analytics identifier; and
sending, by the model training function network element, the identifier of the first model to the first analytics function network element, wherein the first model is used to provide a service corresponding to the analytics identifier.

19. The method according to any one of claims 16 to 18, wherein before receiving, by the model training function network element, the identifier of the first model from the second analytics function network element, the method further comprises:
sending, by the model training function network element, a first interoperability indicator to the first analytics function network element, wherein the first interoperability indicator is an interoperability indicator corresponding to the analytics identifier of the model training function network element, or the first interoperability indicator is an interoperability indicator of the model training function network element.

20. The method according to any one of claims 16 to 19, wherein before receiving, by the model training function network element, the identifier of the first model from the second analytics function network element, the method further comprises:
sending, by the model training function network element, the first information to the first analytics function network element, wherein the first information is associated with the first model.

21. The method according to any one of claims 16 to 20, wherein the first information comprises an identifier of the model training function network element.

22. A communication method, wherein the method comprises:
receiving, by a first analytics function network element, an analytics context transfer request from a second analytics function network element; and
sending, by the first analytics function network element, an analytics context to the second analytics function network element, wherein the analytics context comprises a correlation identifier and an identifier of a model training function network element.

23. The method according to claim 22, wherein the correlation identifier corresponds to first information, the model training function network element is configured to provide the first information, and the first information is associated with a first model.

24. The method according to claim 22 or 23, wherein the method further comprises:
sending, by the first analytics function network element, a model request message to the model training function network element, wherein the model request message comprises an analytics identifier; and
receiving, by the first analytics function network element, an identifier of the first model and the correlation identifier from the model training function network element, wherein the first model is used to provide a service corresponding to the analytics identifier.

25. The method according to claim 23 or 24, wherein after the receiving, by the first analytics function network element, the analytics context transfer request from the second analytics function network element, the method further comprises:
sending, by the first analytics function network element, a third request message to the model training function network element, wherein the third request message comprises the identifier of the first model; and the third request message is used to request the model training function network element to generate an identifier associated with the first information; and
receiving, by the first analytics function network element, a third response message from the model training function network element, wherein the third response message comprises the correlation identifier.

26. The method according to any one of claims 23 to 25, wherein before the receiving, by the first analytics function network element, the analytics context transfer request from the second analytics function network element, the method further comprises:
providing, by the first analytics function network element via the first model, the service corresponding to the analytics identifier; and
sending, by the first analytics function network element, an analytics subscription transfer request to the second analytics function network element, wherein the analytics subscription transfer request comprises the analytics identifier.

27. The method according to any one of claims 22 to 26, wherein before sending, by the first analytics function network element, the analytics context to the second analytics function network element, the method further comprises:
obtaining, by the first analytics function network element, a first interoperability indicator, wherein the first interoperability indicator is an interoperability indicator corresponding to the analytics identifier of the model training function network element, or the first interoperability indicator is an interoperability indicator of the model training function network element; and
determining, by the first analytics function network element, that the first interoperability indicator comprises an identifier of a vendor of the second analytics function network element.

28. The method according to claim 27, wherein the analytics context transfer request comprises the identifier of the vendor of the second analytics function network element.

29. The method according to claim 27, wherein the method further comprises:
obtaining, by the first analytics function network element, the first interoperability indicator from the model training function network element or a network repository function network element.

30. A communication method, wherein the method comprises:
sending, by a second analytics function network element, an analytics context transfer request to a first analytics function network element;
receiving, by the second analytics function network element, an analytics context from the first analytics function network element, wherein the analytics context comprises a correlation identifier and an identifier of a model training function network element;
sending, by the second analytics function network element, the correlation identifier to the model training function network element; and
receiving, by the second analytics function network element, first information from the model training function network element, wherein the first information is associated with a first model.

31. The method according to claim 30, wherein the correlation identifier corresponds to the first information.

32. The method according to claim 30 or 31, wherein before the sending, by the second analytics function network element, the analytics context transfer request to the first analytics function network element, the method further comprises:
receiving, by the second analytics function network element, an analytics subscription transfer request from the first analytics function network element, wherein the analytics subscription transfer request comprises analytics subscription information; and
determining, by the second analytics function network element, the first analytics function network element based on the analytics subscription information.

33. The method according to claim 30 or 31, wherein before the sending, by the second analytics function network element, the analytics context transfer request to the first analytics function network element, the method further comprises:
receiving, by the second analytics function network element, an analytics subscription request from a service consumer network element, wherein the analytics subscription request comprises analytics subscription information; and
determining, by the second analytics function network element, the first analytics function network element based on the analytics subscription information.

34. A communication method, wherein the method comprises:
receiving, by a model training function network element, a correlation identifier from a second analytics function network element;
determining, by the model training function network element, first information based on the correlation identifier, wherein the first information is associated with a first model; and
sending, by the model training function network element, the first information to the second analytics function network element.

35. The method according to claim 34, wherein before the receiving, by the model training function network element, the correlation identifier from the second analytics function network element, the method further comprises:
receiving, by the model training function network element, a third request message from a first analytics function network element, wherein the third request message comprises an identifier of the first model; and the third request message is used to request the model training function network element to generate an identifier associated with the first information; and
sending, by the model training function network element, a third response message to the first analytics function network element, wherein the third response message comprises the correlation identifier.

36. The method according to claim 34 or 35, wherein the method further comprises:
receiving, by the model training function network element, a model request message from the first analytics function network element, wherein the model request message comprises an analytics identifier; and
sending, by the model training function network element, the identifier of the first model and the correlation identifier to the first analytics function network element, wherein the first model is used to provide a service corresponding to the analytics identifier.

37. The method according to any one of claims 34 to 36, wherein the method further comprises:
sending, by the model training function network element, a first interoperability indicator to the first analytics function network element, wherein the first interoperability indicator is an interoperability indicator corresponding to the analytics identifier of the model training function network element, or the first interoperability indicator is an interoperability indicator of the model training function network element.

38. A communication apparatus, comprising a unit or a module configured to perform the method according to any one of claims 1 to 37.

39. A communication apparatus, wherein the communication apparatus comprises at least one processor, wherein the at least one processor is configured to perform the method according to any one of claims 1 to 37.

40. A computer-readable storage medium, wherein the computer-readable storage medium comprises a program, and when the program is run on an apparatus, the apparatus is caused to perform the method according to any one of claims 1 to 37.

41. A computer program product, wherein the computer program product comprises a program or instructions, and when the program or the instructions are executed by an apparatus, the apparatus is caused to perform the method according to any one of claims 1 to 37.

42. A communication system, wherein the communication system comprises a first analytics function network element and a second analytics function network element, wherein the first analytics function network element is configured to perform the method according to any one of claims 1 to 10, and the second analytics function network element is configured to perform the method according to any one of claims 11 to 15.

43. The communication system according to claim 42, wherein the communication system further comprises a model training function network element, and the model training function network element is configured to perform the method according to any one of claims 16 to 21.

44. A communication method, wherein the method comprises:
sending, by a second analytics function network element, an analytics context transfer request to a first analytics function network element;
receiving, by the first analytics function network element, the analytics context transfer request from the second analytics function network element, and sending, by the first analytics function network element, an analytics context to the second analytics function network element, wherein the analytics context comprises an identifier of a first model and an identifier of a model training function network element;
receiving, by the second analytics function network element, the analytics context from the first analytics function network element;
sending, by the second analytics function network element, the identifier of the first model to the model training function network element; and
receiving, by the second analytics function network element, first information from the model training function network element, wherein the first information is associated with the first model.

45. The method according to claim 44, wherein the method further comprises:
receiving, by the model training function network element, the identifier of the first model from the second analytics function network element, and determining, by the model training function network element, the first information based on the identifier of the first model; and
sending, by the model training function network element, the first information to the second analytics function network element.

46. A communication system, wherein the communication system comprises a first analytics function network element and a second analytics function network element, wherein the first analytics function network element is configured to perform the method according to any one of claims 22 to 29, and the second analytics function network element is configured to perform the method according to any one of claims 30 to 33.

47. The communication system according to claim 46, wherein the communication system further comprises a model training function network element, and the model training function network element is configured to perform the method according to any one of claims 34 to 37.

48. A communication method, wherein the method comprises:
sending, by a second analytics function network element, an analytics context transfer request to a first analytics function network element;
receiving, by the first analytics function network element, the analytics context transfer request from the second analytics function network element, and sending, by the first analytics function network element, an analytics context to the second analytics function network element, wherein the analytics context comprises a correlation identifier and an identifier of a model training function network element;
receiving, by the second analytics function network element, the analytics context from the first analytics function network element;
sending, by the second analytics function network element, the correlation identifier to the model training function network element; and
receiving, by the second analytics function network element, first information from the model training function network element, wherein the first information is associated with a first model.

49. The method according to claim 48, wherein the method further comprises:
receiving, by the model training function network element, the correlation identifier from the second analytics function network element, and determining, by the model training function network element, the first information based on the correlation identifier; and
sending, by the model training function network element, the first information to the second analytics function network element.
